# EUROPEAN PATENT APPLICATION

(11) **EP 4 726 206 A1**
(43) Date of publication of application: **15.04.2026**
(21) Application number: 24206053.1
(22) Date of filing: 11.10.2024
(51) Int. Cl.: F03D 13/10, F03D 13/20

(54) **METHOD FOR INSTALLING A RACK AND PINION LIFT SYSTEM IN A WIND TURBINE TOWER, RACK AND PINION LIFT SYSTEM AND TOWER SECTION FOR A WIND TURBINE TOWER**

(71) Applicant: Siemens Gamesa Renewable Energy A/S, 7330 Brande (DK)
(72) Inventor: Olesen, Joern, 7100 Vejle (DK); Sigvartsen, Martin, 7100 Vejle (DK)
(74) Representative: SGRE-Association

(57) **Abstract**

The present invention relates to a method for installing a rack and pinion lift system in a wind turbine tower. The method comprises the following steps:
Providing a first tower section of a wind turbine,
fixing a first lift mast at an inner wall of the first tower section,
providing a second tower section of a wind turbine,
fixing a second lift mast at an inner wall of the second tower section, and
stacking the first and second tower sections upon each other and connecting the first and second lift masts, thereby forming a continuous rack.

The present invention further describes a rack and pinion lift system that is obtainable by this installation method.

Moreover, the present invention relates to a tower section for a wind turbine tower. The tower section comprises a lift mast that is fixed at an inner wall of the tower section via a lift mast support structure. The lift mast support structure is configured to allow for a vertical movement of the lift mast vis-à-vis the inner wall of the tower section.

## Description

### FIELD OF THE INVENTION

This invention relates to a method for installing a rack and pinion lift system in a wind turbine tower, allowing the lift system to be operational immediately after erecting the bottom tower section and to be used during installation of the following middle and top tower sections. Further, this invention relates to a rack and pinion lift system that is obtainable by this manufacturing method and to a tower section that is designed to amplify the benefits of the inventive method.

### BACKGROUND

As the power producing capacity of wind turbine generators over time has grown, so has the height of wind turbine towers. Nowadays, the tallest towers are more than 150 meters tall and future towers are expected to be even taller. As of today, several different tower concepts have been developed, but the most used approach is based on tubular steel towers consisting of up to 5-6 individual prefabricated tower sections that are stacked on top of each other.

Access to the nacelle, which is placed on the top of the tower, is normally given via the tower, wherein conventional wind turbine towers comprise ladders (in one or several flights) from the bottom of the tower to the nacelle. Since climbing ladders that high is both fatiguing and dangerous, many modern wind turbines have, in addition to the ladder, a service-lift installed to the tower.

In those instances, the wind turbines may comprise a wire-guided lift with a cabin, wherein the lift is installed in the inner part of the tower. The cabin is usually movable from a lower platform, usually ground floor, to at least one higher platform, which is for example arranged in a tower top below the nacelle, where the major equipment of the wind turbine like the generator etc. is arranged. The cabin is attached one or more respective wires. A drive wire runs over a traction sheave for lifting and lowering the cabin.

However, the wire guided lifts used today cannot be installed and used until all tower sections have been stacked on top of each other, because this type of lift is suspended and guided via steel wire ropes attached in tower top. This means that tower installation personnel must climb the tower ladder during the tower installation process. Climbing a ladder over these long distances is becoming an increased problem, due to the extreme strain on the human body during climbing.

Notwithstanding the above, the use different elevator types like a rack and pinion lift for the maintenance of wind turbines has generally been considered in EP2826742B1.

### SUMMARY OF THE INVENTION

In view of the above, it is therefore an object of the present invention to provide a method that facilitates the construction of wind turbine towers, to provide a tower that can be installed in a safe and time-efficient manner and to provide a tower section that is designed to amplify the benefits of the innovative installation method. This object is achieved by the claimed subject-matter as defined in the appended claims.

Specifically, the inventors of the present invention surprisingly discovered that preinstalling lift masts in tower sections enabled them to obtain a rack for the elevator system that is readily available before the installation of the tower has been completed. In other words, the rack and pinion lift system of the present invention is operational immediately after erecting the first tower section, meaning that installation personnel no longer need to climb the tower ladder during tower erection, but instead can use the lift. Further, the lift can now be used to transport tools and equipment from platform to platform during the erection of the tower.

This invention is considerably reducing installation time and associated cost for cranes, offshore installation vessel and installation personnel. Additionally, it reduces the physical strain on installation personnel allowing them to save time and to work more efficient.

According to the installation method of this invention, a first tower section of a wind turbine is provided and a first lift mast is fixed at an inner wall of the first tower section. Further, a second tower section of a wind turbine is provided and a second lift mast is fixed at an inner wall of the second tower section. Subsequently, the first and second tower sections are stacked upon each other and the first and second lift masts are connected, thereby forming a continuous rack.

The preinstallation of the first lift mast at the first tower section renders it possible to install a partial rack and pinion lift system, which greatly facilitates the work during the erection of the wind turbine tower. In particular, the first lift masts acts as a partial rack which can be used even before the second tower section is placed on the first tower section. Thus, installation personnel can use the lift and tools and equipment can be transported from the bottom to the top of the of the first tower section.

According to a preferable embodiment of the invention, the lift masts are fixed at the respective inner walls via lift mast support structures. At least one of the lift mast support structures is configured to allow for a vertical movement of the lift mast vis-à-vis the inner wall of the tower section and at least one of the lift masts is vertically moved, vis-à-vis the inner wall of the tower section, before connecting the first and second lift masts. In the context of the present invention the term "vertical" designates a direction in parallel to the central axis of the tower section. The above embodiment constitutes a particularly favourable solution that addresses a major challenge in the installation of the rack and pinion lift system of the present invention:
In general, tubular (steel) tower sections exhibit a significant manufacturing tolerance with regard to the length of the tower section. Since a lift mast with rack (linear gear) must be manufactured at a very precise length and tolerance to function, this variation in length constitutes a major obstacle in the installation of the rack and pinion lift system. Since conventional processes do not usually render it possible to achieve the exact same length of the tower section and the lift mast installed in it, lift mast sections will not meet and connect when tower sections are stacked on top of each other during final tower installation. Hence, rack and pinion lifts are conventionally only installed after the tower sections have been joined.

In this context, the inventors have developed a lift mast support structure that is configured to allow for a vertical movement of the lift mast vis-à-vis the inner wall of the tower section. Accordingly, the vertical position of the lift mast can be changed after the stacking of the tower section, allowing for a precise connection of the preinstalled lift masts.

According to a preferred embodiment, the lift mast support structure comprises sliding means and/or pivoting means that are configured to allow for the vertical movement of the lift mast vis-à-vis the inner wall of the tower section. Preferably, the sliding means allow for a horizontal fixation of the lift mast. The pivoting means preferably allow for horizontal fixation and positioning of the lift mast.

The inventors found that sliding means and pivoting means constitute reliable choices for implementing the vertical movement of the lift mast.

A further preferred embodiment is directed to lift mast support structures comprises locking means. The locking means keep the lift mast in a locked position with regard to the vertical movement of the lift mast vis-à-vis the inner wall of the tower section prior to stacking the tower sections. Subsequently, the locking means are released and at least one of the lift masts is vertically moved vis-à-vis the inner wall of the tower section. Afterwards, two lift masts of the adjacent tower sections are connected to form a continuous rack. The locking means render it possible to keep the lift masts in a locked position during the installation of the tower sections.

According to a further favourable embodiment, the first lift mast and/or the second lift mast is fixed at the respective inner wall of the first and/or second tower section in a position in which the lift mast does not protrude from the face of the tower sections that is to be connected (prior to stacking the first and second tower section). In other words, the axial lift mast end can be positioned offset towards the axial end of the tower section top (or bottom) and locked to the lift mast support structure in a predefined position during the installation of the tower sections. This offset shall prevent a collision with other elements during the installation, for instance with a lower lift mast possibly protruding out of the tower section previously installed in case that tower section is manufactured at minus tolerance.

Preferably, the principle of the presently claimed installation method is extended to a multitude of tower sections: In particular, at least one additional tower section is provided and at least one additional lift mast is fixed at the inner wall of the at least one additional tower section. The at least one additional tower section is then stacked on the previously stacked tower sections and the at least one additional lift mast is connected to the previously connected lift masts. The beneficial technical effect of the present installation method is thus maximized for each tower section.

Furthermore, the present invention is directed to a rack and pinion lift system that is obtainable by an installation method according to any one of the appended claims. The rack and pinion lift system realizes the beneficial technical effect of the underlying installation method, in particular considerably reducing installation time and associated cost for cranes, offshore installation vessel and installation personnel.

Moreover, the present invention is directed to a tower section for a wind turbine tower, comprising a lift mast that is fixed at an inner wall of the tower section via a lift mast support structure. The lift mast support structure is configured to allow for a vertical movement of the lift mast vis-à-vis the inner wall of the tower section. As mentioned above, this tower section allows for a change of the vertical position of the lift mast after the stacking of the tower section, thereby allowing for a precise connection of the preinstalled lift masts.

According to a preferred embodiment, the lift mast support structure comprises sliding means and/or pivoting means, configured to allow for the vertical movement of the lift mast vis-à-vis the inner wall of the tower section. Preferably, the sliding means comprise a bracket such that the lift mast is configured to slide against the bracket. Preferably, the sliding bracket is formed of a material that has a lower strength than the material of the lift mast. That results in the wear and tear being concentrated in the sliding bracket, which is easier to replace than the lift mast. The pivoting means preferably comprise a set of pivotable bars, wherein the pivotable bars are preferably adjustable in length. As mentioned above, these alternatives constitute reliable choices for implementing the vertical movement of the lift mast.

The lift mast support structure preferably comprises locking means which are configured to keep the lift mast in a locked position with regard to the vertical movement of the lift mast vis-à-vis the inner wall of the tower section. The locking means are configured to release the lift mast in an unlocked state. Particularly preferred examples of the locking means comprise locking pins, which work particularly well with sliding means, and length-adjustable and pivotable stays, which work particularly well with the pivoting means.

Preferably, the tower section of the present invention comprises means that are configured to control the vertical movement of the lift mast. These means can act as a lowering (or raising) tool for the lift mast. For instance, a sliding bracket may be provided with a screw that is configured to exert different friction forces against a lift mast. Taking into account gravitational pull on the lift mast, this screw can thus be used to control the downwards vertical movement of the lift mast. Another example is a length-adjustable and pivotable stay, which may also be manipulated such that it controls the vertical movement of the lift mast.

According to a further preferred embodiment of the invention, the tower section is the bottom section of a wind turbine tower and the tower section comprises a vertical support structure. The vertical support structure is configured to support the lift mast in the vertical direction. In this embodiment, the vertical load of the lift mast can be predominantly supported by the vertical support structure in the tower bottom section. Accordingly, the load that needs to be carried by the lift mast support structure is reduced, meaning that the lift mast support structure is less prone to failure. For instance, the vertical support structure may be a platform. Preferably, the lift mast is two-legged or three-legged.

Further, the lift mast of the tower section is preferably formed of multiple longitudinally connected lift mast modules. Preferably, the lift mast is manufactured in modules of several standardized lengths, so that a combination and a number of these standardized mast modules will fit most standardized tower section lengths. This measure facilitates a cost-efficient production and installation of lift masts.

### BRIEF DESCRIPTION OF DRAWINGS

Fig. 1a shows a bottom tower section with sliding means.
Fig. 1b shows a middle tower section with sliding means.
Fig. 2a shows a bottom tower section with pivoting means.
Fig. 2b shows a middle tower section with pivoting means.
Fig. 3a depicts a part of a lift mast with a sliding bracket.
Fig. 3b shows detailed view of parts of the lift mast with a sliding bracket from another perspective.

### DESCRIPTION OF EMBODIMENTS

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including, " and "containing" are to be construed as open-ended terms (i.e., meaning "including, but not limited to,") unless otherwise noted.

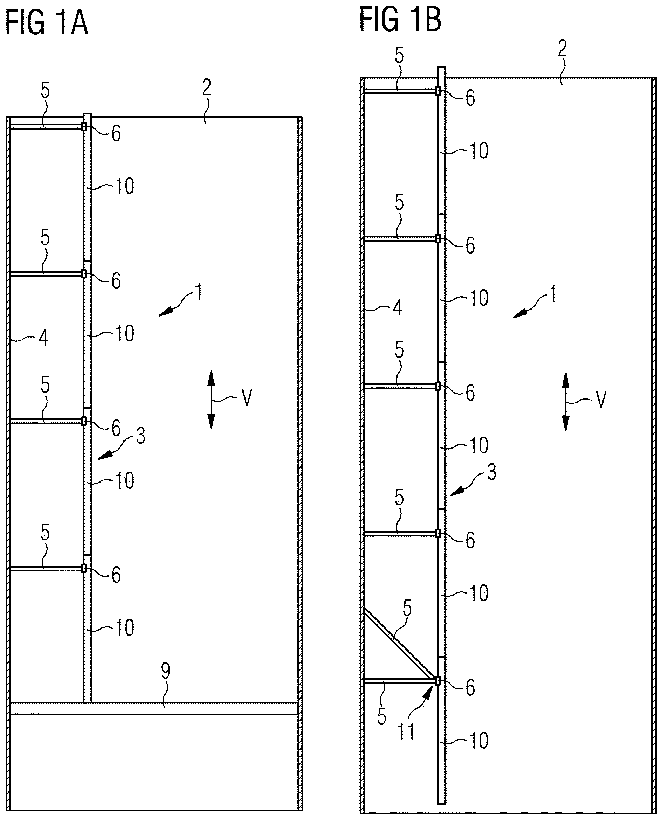

Figures 1a and 1b show a bottom tower section and a middle tower section prior to the stacking of these tower sections. Both tower sections are equipped with respective lift masts that are formed of multiple lift mast modules. The lift masts are fixed to the respective inner walls of the tower sections with lift mast support structures comprising sliding means. In the bottom tower section, the lift mast rests on a vertical support structure. One major advantage is that the lift mast of the bottom tower section is immediately usable for the rack and pinion lift, even before the stacking with the middle tower section occurs. Due to manufacturing tolerances, the upper end of the lift mast in the depicted bottom tower section is not positioned flush with the upper end of the bottom tower section. However, the sliding means in the middle tower section can be used to compensate for this discrepancy: First, the lift mast in the middle tower section is locked in a fixed position by locking pins. In this position, the lift mast is vertically offset towards the top in order to prevent a collision with the lift mast that is protruding from the bottom tower section. After stacking the bottom and middle tower section, the locking pins are released and the lift mast of the middle tower section is lowered via the sliding bracket such that it meets the lift mast of the bottom tower section. By using a dedicated lowering tool (not shown) and the gravitational pull on the lift mast of the middle tower section, the downwards vertical movement of the lift mast can be controlled and the lift masts can be accurately positioned to form a continuous rack for the rack and pinion lift system.

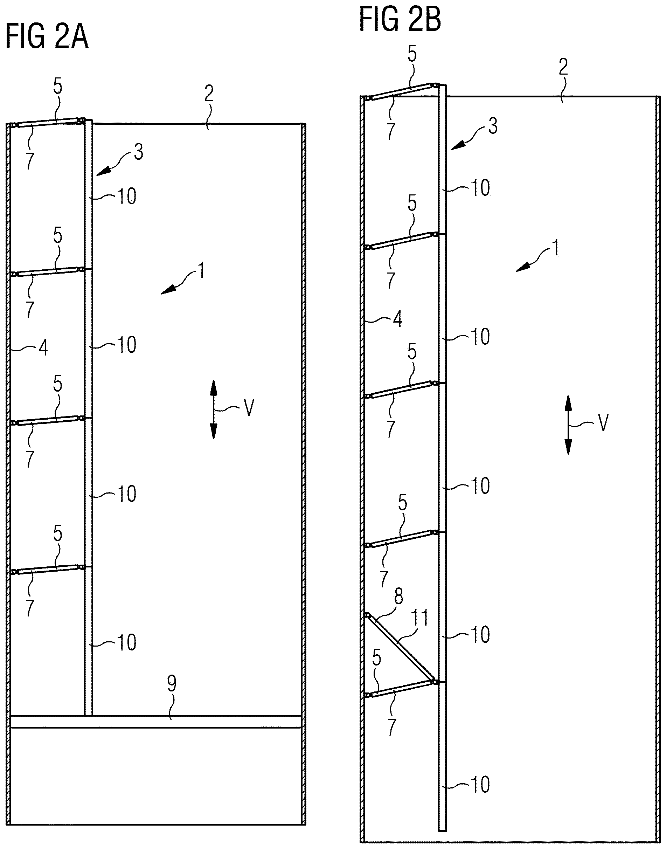

A similar configuration is shown in Figures 2a and 2b. The major difference vis-à-vis the embodiment in Figures 1a and 1b is the configuration of the lift mast support structures, which comprise pivoting means instead of sliding means. Specifically, the pivoting means are designed as length-adjustable and pivoting bars, which allow for an exact horizontal positioning and vertical movement of the lift mast in relation to the tower section. Here, a length-adjustable and pivoting stay acts as locking means, which keeps the lift mast in a locked position during horizontal transportation and the lifting of the tower section. Further, the length-adjustable and pivoting stay acts as control means, i.e. as a lowering tool, for lowering the lift mast in a controlled manner after the stacking of the tower sections.

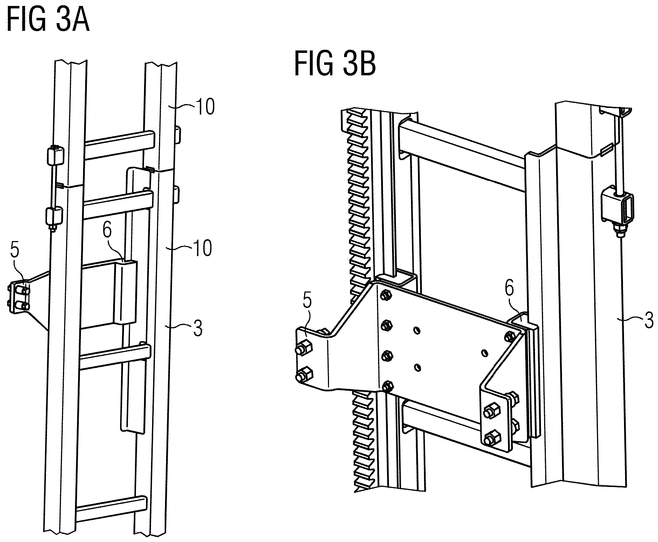

Figures 3a and 3b show a detailed example of a sliding bracket that interacts with the lift mast of a tower section.

### REFERENCE SIGNS

- 1: Rack and pinion lift system
- 2: Tower section
- 3: Lift mast
- 4: Inner wall of tower section
- 5: Lift mast support structure
- 6: Sliding means
- 7: Pivoting means
- 8: Control means
- 9: Vertical support structure
- 10: Lift mast modules
- 11: Locking means
- V: Vertical direction

## Claims

1. Method for installing a rack and pinion lift system in a wind turbine tower, comprising the steps of
providing a first tower section of a wind turbine,
fixing a first lift mast at an inner wall of the first tower section,
providing a second tower section of a wind turbine,
fixing a second lift mast at an inner wall of the second tower section, and
stacking the first and second tower sections upon each other and connecting the first and second lift masts, thereby forming a continuous rack.

2. Method for installing a rack and pinion lift system in a wind turbine tower according to claim 1, wherein the lift masts are fixed at the respective inner walls via lift mast support structures, wherein at least one of the lift mast support structures is configured to allow for a vertical movement of the lift mast vis-à-vis the inner wall of the tower section, and wherein at least one of the lift masts is vertically moved, vis-à-vis the inner wall of the tower section, before connecting the first and second lift masts.

3. Method for installing a rack and pinion lift system in a wind turbine tower according to claim 2, wherein at least one of the lift mast support structures comprises sliding means and/or pivoting means that are configured to allow for the vertical movement of the lift mast vis-à-vis the inner wall of the tower section.

4. Method for installing a rack and pinion lift system in a wind turbine tower according to claim 3 or 4, wherein at least one of the lift mast support structures comprises locking means,
wherein the locking means keep the lift mast in a locked position with regard to the vertical movement of the lift mast vis-à-vis the inner wall of the tower section prior to stacking the tower sections, and
wherein the locking means are subsequently released and at least one of the lift masts is vertically moved, vis-à-vis the inner wall of the tower section, and
wherein two lift masts of the adjacent tower sections are subsequently connected to form a continuous rack.

5. Method for installing a rack and pinion lift system in a wind turbine tower according to any of the preceding claims, wherein, prior to stacking the first and second tower section,
the first lift mast and/or the second lift mast is fixed at the respective inner wall of the first and/or second tower section in a position in which one axial end is vertically offset vis-à-vis one of the axial ends of the tower section top or bottom.

6. Method for installing a rack and pinion lift system in a wind turbine tower according to any of the preceding claims, wherein at least one additional tower section is provided, at least one additional lift mast is fixed at the inner wall of the at least one additional tower section, the at least one additional tower section is stacked on the previously stacked tower sections and the at least one additional lift mast is connected to the previously connected lift masts.

7. Rack and pinion lift system, obtainable by an installation method according to any one of the previous claims.

8. Tower section for a wind turbine tower, comprising a lift mast that is fixed at an inner wall of the tower section via a lift mast support structure, wherein the lift mast support structure is configured to allow for a vertical movement of the lift mast vis-à-vis the inner wall of the tower section.

9. Tower section for a wind turbine tower according to claim 8, wherein the lift mast support structure comprises sliding means and/or pivoting means, configured to allow for the vertical movement of the lift mast vis-à-vis the inner wall of the tower section.

10. Tower section for a wind turbine tower according to claim 8 or 9, wherein the sliding means comprise a bracket and wherein the lift mast is configured to slide against the bracket.

11. Tower section for a wind turbine tower according to any one of claims 8 to 10, wherein the pivoting means comprise a set of pivotable bars and wherein the pivotable bars are preferably adjustable in length.

12. Tower section for a wind turbine tower according to any one of claims 8 to 11, wherein the lift mast support structure comprises locking means which are configured to keep the lift mast in a locked position with regard to the vertical movement of the lift mast vis-à-vis the inner wall of the tower section and which are configured to release the lift mast in an unlocked state.

13. Tower section for a wind turbine tower according to claim 12, comprising control means that are configured to control the vertical movement of the lift mast.

14. Tower section for a wind turbine tower according to any one of claims 8 to 13, wherein the tower section is the bottom section of a wind turbine tower and wherein the tower section comprises a vertical support structure, configured to support the lift mast in the vertical direction.

15. Tower section for a wind turbine tower according to any one of claims 8 to 14, wherein the lift mast of the tower section is formed of multiple longitudinally connected lift mast modules.
